# EUROPEAN PATENT APPLICATION

(11) **EP 1 300 784 A1**
(43) Date of publication of application: **09.04.2003**
(21) Application number: 01930045.8
(22) Date of filing: 11.05.2001
(51) Int. Cl.: G06F 17/60

(54) **METHOD OF OFFERING MEMBER SERVICES, MEMBER SERVICE OFFERING SYSTEM, AND MOBILE TELEPHONE CUSTOMER RESERVATION ADMINISTRATING SYSTEM**

(30) Priority: 11.05.2000 JP 2000180555; 27.12.2000 JP 2000399236
(71) Applicant: Kouketsu, Kazuyoshi, Higashiosaka-shi, Osaka 579-8043 (JP)
(72) Inventor: KOUKETSU, Kazuyoshi, Higashiosaka-shi, Osaka-fu (JP); YAO, Yoshikazu, Takarazuka-shi, Hyogo 665-0033 (JP)
(74) Representative: Schoppe, Fritz, Dipl.-Ing.
(86) International application number: JP0103919
(87) International publication number: WO01086531

(57) **Abstract**

A member service providing method according to the present invention includes the steps of: acquiring personal information of each service user who is provided with a member service; recording the personal information of the service user who is provided with the member service; acquiring information about a shop of a service provider who provides member services to service users thereof and information about merchandise and/or services the service provider provides; recording the information about the shop of the service provider who provides the member services to the service users and the information about the merchandise and/or the services the service provider provides; transmitting data for displaying contents of the merchandise and/or the services provided by the service provider on a service user terminal used by the service user; recording the contents of a request of a merchandise purchase and/or service that the service user has made for the displayed merchandise and/or the services; and managing collectively the recorded contents of the request for each service provider.

## Description

### TECHNICAL FIELD

The present invention relates to a member service providing method, a member service providing system, and a customer reservation management system using cellular phones. More specifically, the present invention relates to a member service providing method, a member service providing system, and a customer reservation management system using cellular phones that provide a variety of member services through the exchange of a variety of data with customers using, for example, service user terminals such as cellular phones.

### BACKGROUND ART

It is a common practice to directly call a service provider when making a reservation for using services provided by restaurants, hotels and airlines and for buying various goods such as concert tickets. In such cases, the service provider is informed of the service user's name, address, home phone number, and desired services or goods during the call. In case of a reservation for a service that will need to prepare food or specific facilities, the date that the customer will be served is provided to complete the reservation. When the service user visits the service provider to be served, the service provider identifies the service user with the information the service provider holds, such as his/her name and home phone number.

With the recent popularization of the Internet, network services using personal computers and cellular phones have become widely available. For example, airline tickets and concert tickets can be reserved through such Internet-based reservation services. In those services, a service user visits the homepage of a service provider or a homepage for cellular phone users prepared by a cellular phone company via a personal computer or a cellular phone, and inputs the data for the above-mentioned items to make a reservation.

Member services are available even at small businesses such as supermarkets and barbers/hair-salons. They enroll their customers as members using the name, address and phone number, and issue membership cards to them. The service providers conduct marketing and advertising activities, utilizing their membership lists.

When a service provider wants to acquire new customers, it sends direct mail and direct e-mail to the target customers with reference to customer lists that the service provider has obtained individually.

In such a conventional reservation method, the information collected upon reservation calls is often limited to the service user's name and phone number. Thus, for example, if an incorrect phone number is provided and the reservation is cancelled with no notice, the service provider has no way for dealing with such a problem and wastes the prepared food and attendants, failing to collect the cancellation penalty. To deal with such problems, service providers may get a credit card number of the reservation applicant at the time a reservation is made. However, if the reservation applicant does not have a credit card or refuses to provide the card number because of no reliability on the service providers, the approach that relies on credit cards is useless.

Also, in many of the conventional reservation services, since individual companies and shops handle reservations independently, customer data is independently collected by the respective companies and shops as service providers. As a result, each user has to provide the same personal information to individual service providers each time of new reservation or request is made for services. Each service provider, in turn, only has the data of customers who have made reservations and used its services at the company or its outlets. Thus, it is difficult to conduct efficient marketing for acquiring new customers.

Also, in the reservation services utilizing the cellular phone-based communications services provided by cellular phone companies, it is necessary to identify each user with his/her credit card and to remember the reservation number. Then, if the user does not have a credit card or the user forgets the reservation number, it is not easy to solve the problems. Even when the user has a credit card, there is a problem in that the user can reserve services for the same time schedule served by different companies which the user cannot use at the same time, for example, that he/she can mistakenly reserve two flights for the same departure time of different airlines. In Japan, the driver's license and the student ID card are usually used for individual identification. Otherwise, the health insurance policy is often used for identification for those who do not have either a driver's license or student card. However, since more than one name is often listed on the health insurance policy, it is not suitable for individual identification.

Meanwhile, since respective companies and shops as the service providers have their individual membership systems and issue their own membership cards, the number of membership cards becomes large, and their maintenance and use are a great inconvenience.

Furthermore, service users often receive direct mail and direct e-mail from service providers they do not know. Thus, the service users are not likely to read such mail. Even if a service user reads the mail and gets interested in a service, he/she is not likely to purchase merchandise or order the service because the advertisement is delivered from an unknown service provider and he/she is not sure whether the service provider is reliable or not.

It is, therefore, a main object of the present invention is to provide a member service providing method, a member service providing system, and a customer reservation management system using cellular phones, wherein the reservation management process can be carried out securely and easily, the service users and service providers can utilize membership systems effectively, and the sales promotion activities using direct e-mail can be efficiently performed.

### DISCLOSURE OF THE INVENTION

The present invention as set forth in claim 1 is a member service providing method using computer networks. This method includes the steps of acquiring personal information of each service user who is provided with a member service, recording the personal information of the service user who is provided with the member service, acquiring information about a shop of a service provider who provides member services to its service users and information about merchandise and/or services the service provider provides, recording the information about the shop of the service provider who provides the member services to the service users and the information about the merchandise and/or the services the service provider provides, transmitting data for displaying contents of the merchandise and/or the services provided by the service provider on a service user terminal used by the service user, recording the contents of a request of merchandise purchase and/or service that the service user has made for the displayed merchandise and/or services, and managing collectively the recorded contents of the request for each service provider.

The invention as set forth in claim 2 is the member service providing method as set forth in claim 1, wherein the information about the shop of the service provider who provides the member services to the service users includes information about business categories to which the shop belongs, the contents of the request of the merchandise purchase and/or the service that the service user has made for the displayed merchandise and/or the services include information about business categories to which the shop dealing the displayed merchandise and/or services belongs, and the method further includes the step of checking for a request made for the same time and date and the same business category by collating contents of requests made so far with the contents of the request of the merchandise purchase and/or service that the service user has made for the displayed merchandise and/or the services.

The invention as set forth in claim 3 is the member service providing method as set forth in claim 2, further including the step of transmitting to the service provider data rejecting the contents of the request of the merchandise purchase and/or the service that the service user has made for the displayed merchandise and/or services if there is another request made for the same time and date and the same business category in the step of checking for the request made for the same time and date and the same business category by collating the contents of the request of the merchandise purchase and/or the service that the service user has made so far for the displayed merchandise and/or the services with the contents of the request of the merchandise purchase and/or the service that the service user has made for the displayed merchandise and/or services.

The invention as set forth in claim 4 is the member service providing method as set forth in any one of claims 1 to 3, wherein the personal information of the service user who is provided with the member service and the contents of the request of the merchandise purchase and/or the service that the service user has made for the displayed merchandise and/or the services include an identification number of the service user terminal used by the service user, and the method further includes the step of acquiring the identification number of the service user terminal the service user has been assigned, when the service provider processes the contents of the request of the merchandise purchase and/or the service that the service user has made for the displayed merchandise and/or the services, and verifying the acquired identification number against the recorded contents of the request of the merchandise purchase and/or the service that the service user has made for the displayed merchandise and/or services, by the recording service provider.

The invention as set forth in claim 5 is the member service providing method as set forth in claim 4, wherein the identification number is a phone number.

The invention as set forth in claim 6 is the member service providing method as set forth in claim 4, wherein the identification number is a global IP address.

The invention as set forth in claim 7 is the member service providing method as set forth in any one of claims 1 to 6, wherein the personal information of the service user includes an e-mail address of the service user, and the method further includes the step of attaching information recorded in advance to be attached to e-mail and sending the e-mail, when the service provider sends e-mail to the e-mail address of the service user.

The invention as set forth in claim 8 is the member service providing method as set forth in any one of claims 1 to 7, wherein the personal information of the service user who is provided with the member service includes information about a category of a matter which the service user desires, the information recorded in advance to be attached to e-mail includes information about a category to which the information of interest belongs, and, in the step of attaching the information recorded in advance to be attached to e-mail and sending the e-mail when the service provider sends the e-mail to the e-mail address of the service user, only information to be attached to e-mail, which belongs to the category of the service/product which the service user desires is attached to the e-mail.

The invention as set forth in claim 9 is a member service providing system including a service user terminal carried by a service user, a service provider terminal used by a service provider, and an administration server for managing service arrangements, the terminals and the server being connected to one another via a network, wherein the administration server includes a service user database storing personal information data of member service users, a merchandise database storing data about services and merchandise provided by the service provider, and a reservation database storing reservation data created when the service user makes a service request through the service user terminal with reference to the merchandise database, and the administration server has a function of managing the reservations for each service provider.

The invention as set forth in claim 10 is the member service providing system as set forth in claim 9, wherein, when a reservation is made through the service user terminal, the administration server answers that the reservation is refused if there is data of another reservation made for the same time and date and the same business category stored in the reservation database.

The invention as set forth in claim 11 is the member service providing system as set forth in claim 9 or 10, wherein identification numbers are allocated to the service user terminals with no overlap, the personal information data includes the identification number of the service user terminal used by the service user, the identification number of the service user terminal through which a reservation has been made is recorded in the reservation data, and user identification upon each service is carried out by searching the service reservation database using the identification number as a search key.

The invention as set forth in claim 12 is the member service providing system as set forth in any one of claims 9 to 11, wherein the search in the service reservation database is performed via the service provider terminal.

The invention as set forth in claim 13 is the member service providing system as set forth in claim 11 or 12, wherein the identification number is sent to the service provider terminal from the service user terminal by at least one of an electronic communications method, an electric communications method, an electromagnetic communications method, and an optical communications method, and the sent identification number is used for searching in the service reservation database.

The invention as set forth in claim 14 is the member service providing system as set forth in any one of claims 11 to 13, wherein the service user terminal is a communications device having telephone and packet exchange functions, and the identification number is a phone number.

The invention as set forth in claim 15 is the member service providing system as set forth in any one of claims 11 to 13, wherein the service user terminal is a communications device having telephone and packet exchange functions, and the identification number is a global IP address.

The invention as set forth in claim 16 is the member service providing system as set forth in any one of claims 9 to 15, wherein the administration server sends to the service user terminal authentication data created or selected for each reservation that is made with the service user terminal, and user identification upon each service is carried out by sending the authentication data to the service provider terminal from the service user terminal by at least one of an electronic communications method, an electric communications method, and an optical communications method, and by using the sent authentication data for search in the service reservation database.

The invention as set forth in claim 17 is the member service providing system as set forth in claim 16, wherein the authentication data is sent also to the service provider terminal to which the reservation is made, and user identification upon each service is carried out by comparing the authentication data sent from the service user terminal with the authentication data sent from the administration server.

The invention as set forth in claim 18 is the member service providing system as set forth in claim 16 or 17, wherein the authentication data is audio data with which a voice replay function of the service user terminal talks, and the user identification is carried out by replaying said audio data with the service user terminal.

The invention as set forth in claim 19 is the member service providing system as set forth in claim 18, wherein the service provider terminal has a voice converting function unit for converting voice into audio data, and user identification is carried out by converting voice replayed by the service user terminal into audio data and comparing the audio data with the authentication data sent from the administration server.

The invention as set forth in claim 20 is the member service providing system as set forth in any one of claims 9 to 19, wherein previously specified information data is attached to e-mail to be sent when the e-mail is sent from the service provider terminal to the service user terminal via the administration server.

The invention as set forth in claim 21 is the member service providing system as set forth in claim 20, wherein the information data includes URL of an appropriate homepage.

The invention as set forth in claim 22 is the member service providing system as set forth in claim 20 to 21, wherein the administration server has a questionnaire database storing data related to a category of information which the service user desires, the information data has an attribute of categories, and only the information data belonging to a category corresponding to the data related to the category of the information which the service user desires is attached to the e-mail.

The invention as set forth in claim 23 is the member service providing system as set forth in any one of claims 20 to 22, wherein the administration server has a service provider database storing business category data related to business categories to which at least the service providers using the service provider terminals belong, the information data has attributes of business categories, and when the service provider terminal sends e-mail to the service user terminal via the administration server the administration server acquires the business category to which the service provider terminal belongs from the service provider database and does not attach to the e-mail the information data having the attributes of the same business category as the acquired one.

The invention as set forth in claim 24 is the member service providing system as set forth in any one of claims 9 to 23, wherein if the sent e-mail fails to reach the service user terminal a predetermined number of times, the administration server deactivates a function of sending e-mail to the service user terminal.

The invention as set forth in claim 25 is the member service providing system as set forth in any one of claims 9 to 24, wherein the service provider terminal sends to the service user terminal electronic data about how much the service user owes for the merchandise purchase and/or the service.

The invention as set forth in claim 26 is the member service providing system as set forth in claim 25, wherein the electronic data is e-mail.

The invention as set forth in claim 27 is the member service providing system as set forth in any one of claims 9 to 26, wherein a point for the service and/or the merchandise purchase is awarded according to how much the service user has used services and/or purchased merchandise.

The invention as set forth in claim 28 is the member service providing system as set forth in claim 27, wherein the point awarded can be accepted only by the service provider from which the service user has used a service and/or purchased merchandise.

The invention as set forth in claim 29 is the member service providing system as set forth in claim 27, wherein the point awarded can be accepted by all the service providers registered in the administration server.

The invention as set forth in claim 30 is the member service providing system as set forth in claim 27, wherein the awarded point includes a point acceptable only by the service provider from which the service user has received a service and/or merchandise and a point acceptable by all the service providers registered in the administration server, and the point acceptable only by the service provider from which the service user has received the service and/or merchandise and the point acceptable by all the service providers from which the service user has received the services and/or merchandise are exchangeable.

The invention as set forth in claim 31 is the member service providing system as set forth in claim 30, wherein the point that is acceptable only by the service provider from which the service user has received the service and/or merchandise can be exchanged at a predetermined exchange rate with the point acceptable by all the service providers registered in the administration server.

The invention as set forth in claim 32 is a cellular phone-based customer reservation management system dealing with reservations collectively that are made by service users and placed with a plurality of service providers. This system includes plural types of service user terminals, a plurality of service provider terminals possessed by service providers providing individual services of the plural types, and a system server. This system server has a customer database storing information about at least one service user who receives services, and a client information database that is installed in each service provider and stores information about the individual service providers and contents of their services. This server accepts via the individual service provider terminals reservations sent from the service user terminals to the service provider terminals, and collectively manages the reservations placed with each service provider.

The invention as set forth in claim 33 is the cellular phone-based customer reservation management system as set forth in claim 32 that provides answers that the reservation is refused if another reservation has already been made for the same time and date and the same business category by the respective service users when the service user makes a reservation for a service.

The invention as set forth in claim 34 is the cellular phone-based customer reservation management system as set forth in claim 32 or 33, wherein service user identification is carried out by referring to the respective databases in the server based on a number allocated to the service user terminal possessed by each service user.

The invention as set forth in claim 35 is the cellular phone-based customer reservation management system as set forth in any one of claims 32 to 34, wherein when the service provider sends e-mail to its service users, information specified by a system administrator of the system server is sent attached to the e-mail.

### BRIEF DESCRIPTION OF THE DRAWINGS

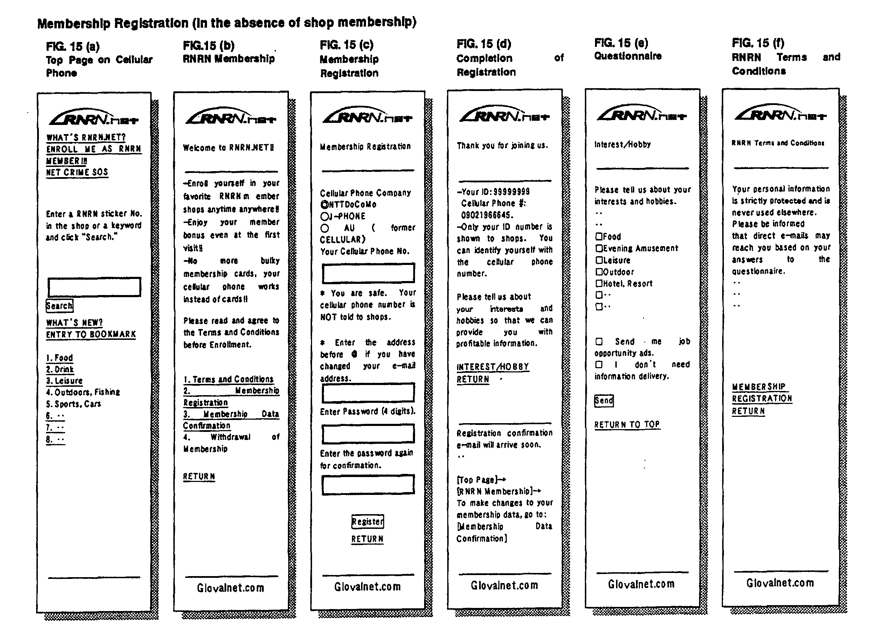

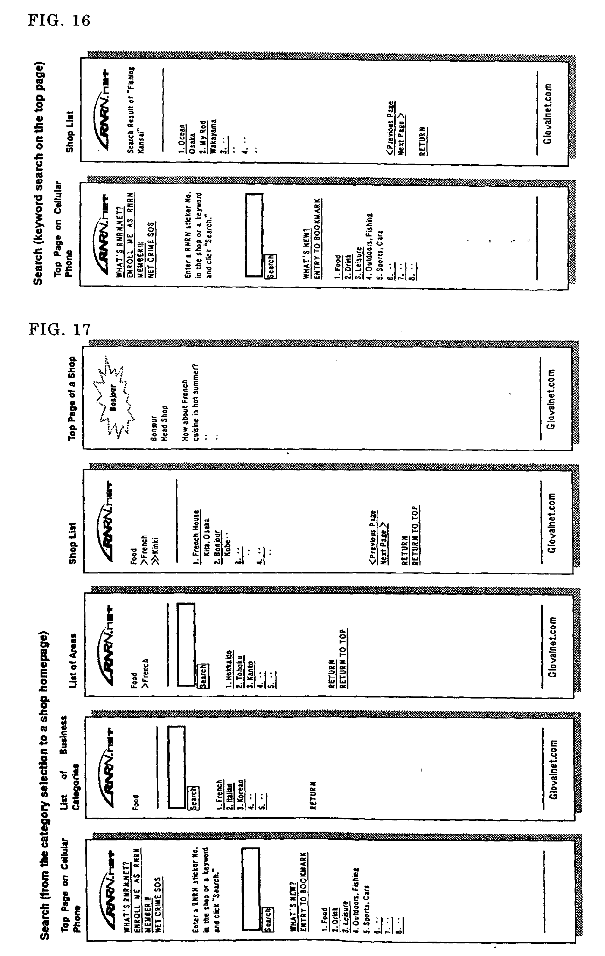

FIG. 1 is a schematic diagram illustrating the system configuration of the present invention.
FIG. 2 is a schematic diagram illustrating another system configuration of the present invention.
FIG. 3 is a schematic diagram illustrating a member service providing system according to the present invention.
FIG. 4 is a schematic diagram illustrating an information search system; FIG. 5 is a schematic diagram illustrating a reservation information management system; and FIG. 6 is a schematic diagram illustrating an advertising e-mail delivery system.
FIG. 7 is a block diagram of a management server; FIG. 8 is a schematic diagram illustrating data recorded in a storage device; FIG. 9 is a schematic diagram illustrating the databases managed by a database management system; and FIG. 10 is a schematic block diagram of a service user terminal.
FIG. 11 is a block diagram of a service provider terminal; FIG. 12 is a schematic diagram illustrating data recorded in a storage device; FIG. 13 is a block diagram of a billing server; and FIG. 14 is a block diagram of a settlement terminal.
FIG.S 15 is a diagram illustrating a screen image displayed on a user terminal wherein FIG. 15(a) shows the top menu screen image; FIG. 15(b) shows the screen image explaining the service system; FIG. 15(c) shows the screen image for membership registration; FIG. 15(d) shows the screen image completing membership registration; FIG. 15(e) shows the screen image for a questionnaire; FIG. 15(f) shows the screen image describing the Terms and Conditions; and FIG. 16 is a diagram illustrating another screen image displayed on a user terminal.

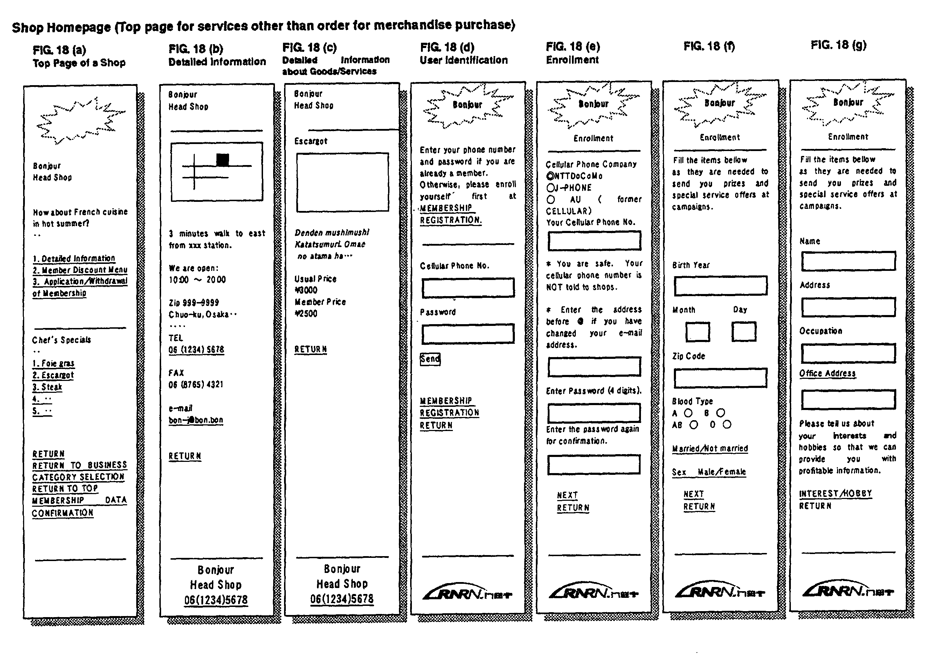

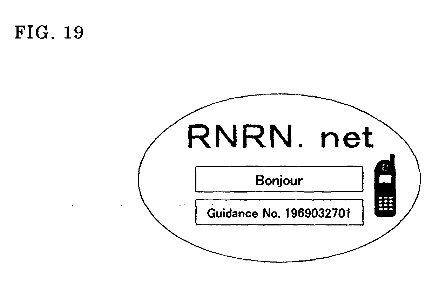

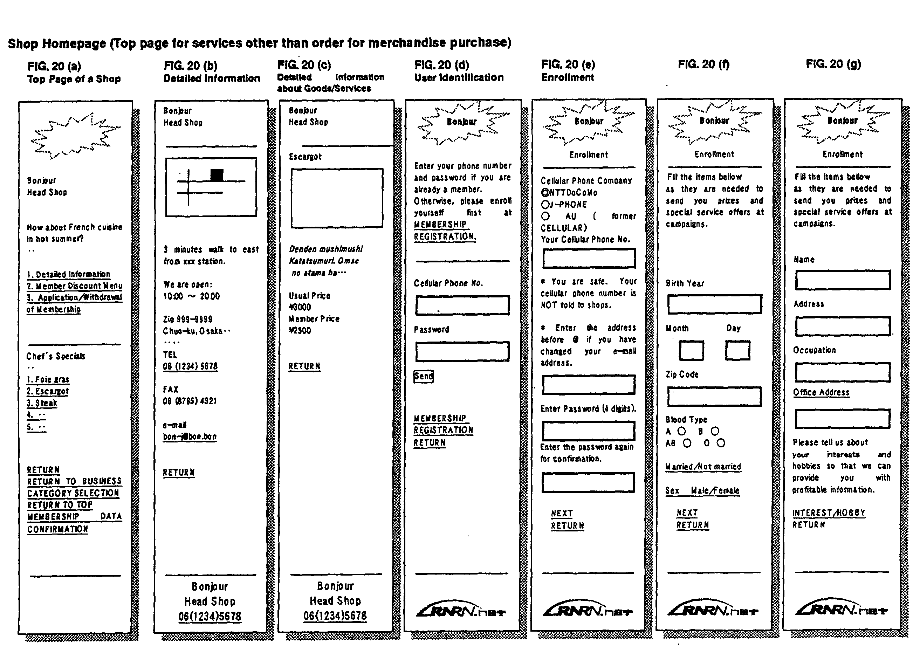

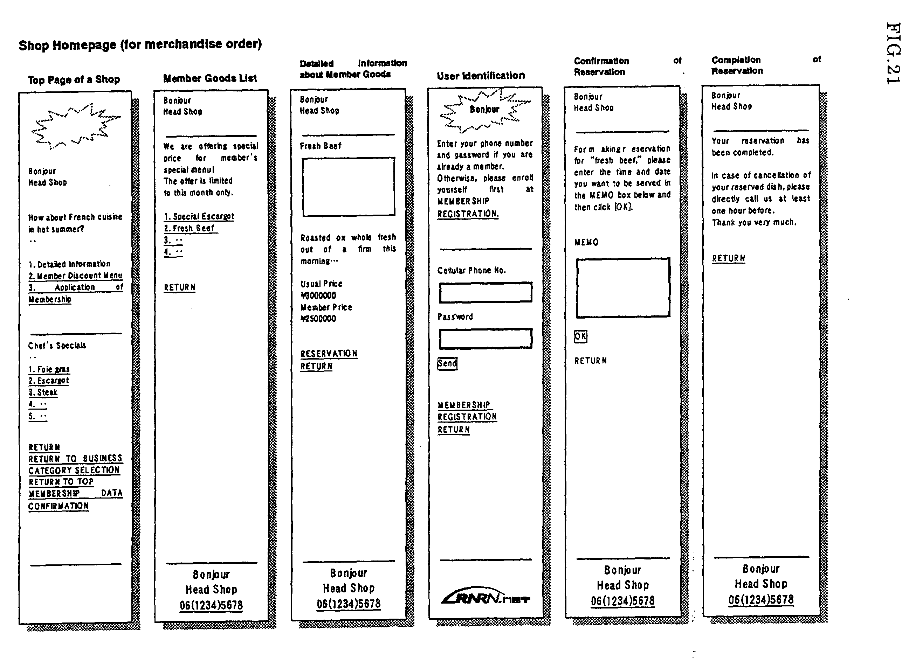

FIG. 17 is a diagram illustrating another screen image displayed on a user terminal; FIG. 18 a diagram illustrating a screen image displayed on a user terminal; FIG. 19 is a diagram illustrating a sticker adhered to an appropriate site in a shop or sight-seeing site; FIG. 20 is a diagram illustrating another screen image displayed on a user terminal; and FIG. 21 is a diagram illustrating another screen image displayed on a user terminal.

### BEST MODE FOR CARRYING OUT THE INVENTION

The above and other objects, features, and advantages of the present invention will be more fully apparent from the following outline and detailed description of the embodiments of the invention taken in conjunction with the accompanying drawings.

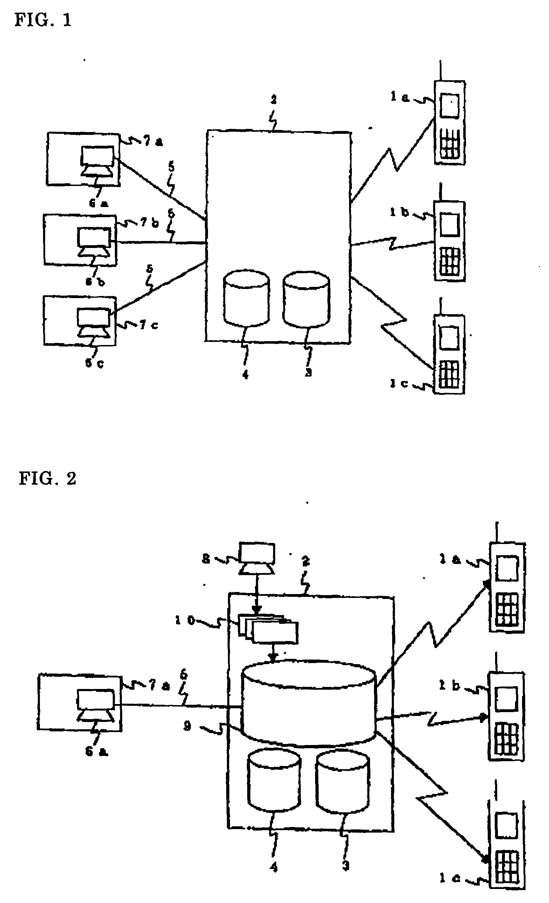

Now the outline of the present invention will be described below. In FIG. 1, the reference alphanumeric symbols 1a, 1b, and 1c denote cellular phones working as service user terminals, 2 is a system server, 3 is a customer information database, 4 is a client information database, 5 is a dedicated line or the Internet, 6a, 6b, and 6c are client terminals, and 7a, 7b, and 7c are clients or service providers such as shops and enterprises. Next described are the steps for a service user having the service user terminal 1a to make a reservation for a service using the present system and to receive the service. The service user operates the service user terminal 1a (hereafter called a cellular phone) to establish a connection to the system server 2. The connected system server 2 transmits a menu screen image to the cellular phone 1a. The cellular phone 1a that has received the menu screen image displays the received menu screen image on its display. The service user operates the cellular phone 1a through the displayed menu screen image to select a reservation, and the cellular phone 1a sends data indicating that a reservation has been selected. In a similar manner, the service user chooses the business category, location, shop (client) and other items of the service to be reserved. If the service user has not been registered as a member of the present system, the service user is urged to select a client. When the menu screen image of the client is displayed, the user selects MEMBERSHIP REGISTRATION to enroll himself as a member. The service user operates the cellular phone 1a and selects MEMBERSHIP REGISTRATION in the client's menu screen image. When the system server 2 receives data indicating the start of membership registration, it sends the Terms and Conditions for Membership to the cellular phone 1a. The service user reads the Terms and Conditions displayed on the display of the cellular phone 1a, selects AGREE or DISAGREE, and sends the selected result information to the system server. If "DISAGREE" is selected, the system server ends the membership registration process and sends the first menu screen image to the cellular phone 1a. If "AGREE" is selected, the system server 2 sends a format for new membership application to the cellular phone 1.

The service user inputs information such as his/her name, e-mail address, birth date, sex, address, phone number, and information of interest in the new membership application format received by the cellular phone 1a. The cellular phone 1a sends such information to the system server 2. After the system server 2 confirms the input data with the service user, it sends a screen image indicating the completion of membership registration to the cellular phone 1a along with the new membership number. The phone number of the cellular phone 1a is used as the membership number as it is. The service user has to repeat membership registration each time he/she uses another client although he/she has already registered himself/herself as a member of a client. However, now he/she only has to input the membership number and a password for membership registration. A client is not allowed to see the membership information of another client. Meanwhile, a member can reserve only the services provided by the clients where he/she has been enrolled. Thus, if a member of a client enrolls himself/herself in another client, the client can see the membership information of the member who has been registered in another client. When the service user has already registered himself/herself as a member, the system server 2 sends a membership confirmation screen image to the cellular phone 1a in order to make a service reservation. The service user inputs his/her membership number and the password in the membership confirmation screen image displayed on the cellular phone 1a.

When the system server 2 receives a membership number and a password, it identifies the user with reference to the personal information database 3, relying on the received information. If the user is identified as a valid member, the system server searches the client information database 4 for the service-related information such as the service type and available hours of the client 7a with which the user is going to place a reservation, and sends such information to the cellular phone 1a. The service user, in turn, inputs the necessary information such as the desired service contents and schedule, responding to the service-related information displayed on the cellular phone 1a. Then the cellular phone 1a sends respective information to the system server 2. Based on the received information, the system server 2 refers to the client information database 4 to check for a reservation made by the same service user for the same time on the same day in the client 7a and other clients belonging to the same business category. If there is a previous reservation, the server sends an error screen image to the cellular phone 1a. The reservation information of individual clients is stored in the client information database. If there is no previous reservation, the server sends a reservation content confirmation screen image to the cellular phone 1a. If the reservation is confirmed, the server sends the cellular phone 1a a screen image indicating the reservation has been accepted. When a member makes a reservation in the client screen image, a server 9 sends reservation confirmation mail to the cellular phones 1a, 1b and 1c. This mail is e-mail, for example, separate from the reservation confirmation made through the exchange of screen images.

When the reservation is completed, the system server 2 sends the reservation contents to the client terminal 6a via the dedicated line or the Internet 5. The system server is connected with the client terminals by a dedicated line or the Internet; however, each client may select the connection mode. When a service user visits a client to receive the reserved service, the client identifies the user as the person who has made the reservation. The service user presents his/her own cellular phone number to the client, while the client accesses to the database via the client terminal to check his/her ID, reservation, and reservation contents based on the presented cellular phone number.

In this way, the cellular phone-based customer reservation management system of the present invention makes it easy to make a variety of reservations only with simple key operations on a cellular phone. Since the reservation data is collectively managed, duplicated reservations by the same service user can be prevented in the same business category. Furthermore, since the cellular phone number is used as the membership number, there is no need to prepare a separate membership card and user identification can be carried out only by presenting his/her own cellular phone number. If the members are shared by all the clients, all the clients can monitor every member when the clients input a membership number and a password in a shop terminal.

In FIG. 2, the reference numeral 8 denotes a system administrator's terminal, and 9 is a mail server. The other elements are the same as those depicted in FIG. 1, and the descriptions thereof are omitted. When a client 7 sends mail to its service users, the client terminal 6 is connected to the system server 2 to acquire from the personal information database 3 the membership information registered by each client. When the mail contents are entered to the client terminal 6 and the mail is delivered, the mail is now sent to the mail server 9 in the system server 2. The mail server 9 has received in advance information 10 to be attached to mail. This information has been sent from the system administrator's terminal 8 in advance. The mail server 9 acquires the information the target service user may want from the personal database 3, attaches the information 10 to be attached to the mail that meets each of the service user's needs to the mail delivered from the client 6, and sends the mail to the cellular phones 1a, 1b and 1c of the respective service users. In this way, since information each service user may want is attached to the mail sent by each client according to the present invention, more service users will be likely to read the delivered mail.

As described above, the cellular phone-based customer reservation management system of the present invention is a reservation management system dealing with reservations collectively that are made by a service user and placed with a plurality of service providers. This system includes a plurality of service user terminals possessed by service users receiving any of a plurality of types of services, a plurality of service provider terminals possessed by service providers providing the individual services of plural types, and a system server. This system server has customer databases that are installed in the service providers, respectively, and stores the information about a plurality of service users who receives services, client information databases that are installed in the respective service providers and each store the information about the individual service providers and the contents of their services, and reservation management databases that are installed in the respective service providers and stores the information about reservation inquiries from the service users and the reservation information. This server accepts via the individual service provider terminals the reservations of the service sent from the service user terminals to the service provider terminals, and collectively manages the reservations placed with each service provider. Thus the system can collectively manage the information about the customers and reservations of the plurality of service providers.

This cellular phone-based customer reservation management system that indicates that the reservation is refused if another reservation has already been made for the same time and date and the same business category by the respective service users when the service user makes a reservation for a service. Thus, a reservation for services that the same service user cannot receive at the same time can be prevented.

The service user identification is carried out by referring to the databases in the server based on the number allocated to the service user terminal possessed by each service user. Thus, the service user does not need a credit card or a driver's license. The service user only has to have a cellular phone to surely carry out his/her identification.

When a service provider sends e-mail to its service users, information specified by a system administrator of the system server is also sent attached to the e-mail. Thus, the service provider can advertise its services efficiently, while the service user can get a variety of information via e-mail.

Next described is a member service providing system according to the present invention.

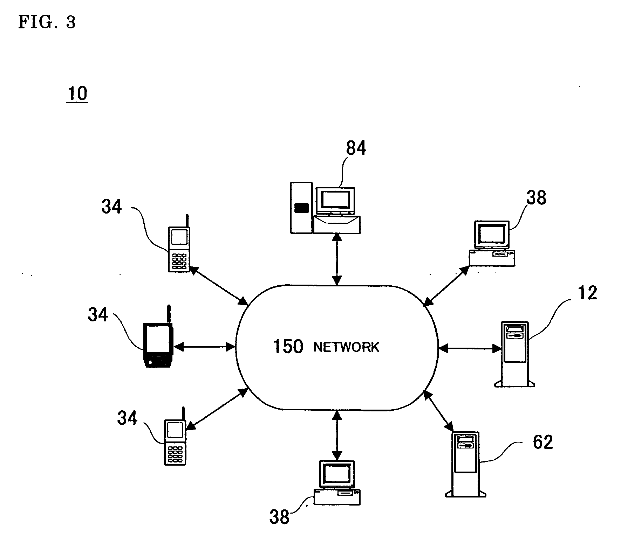

FIG. 3 is a schematic diagram illustrating the member service providing system according to the present invention. In the member service providing system 10, an administration server 12, service user terminals 34, service provider terminals 38, a billing management server 62, and a settlement terminal 84 are connected to one another via a network 150.

The member service providing system according to the present invention is a system of which a main function is to make a reservation and/or an order using e-mail and terminals such as cellular phones and PDAs for establishing connection to the Internet. This system can be classified into (1) Service information search system, (2) Service reservation management system, and (3) Advertising mail delivery system.

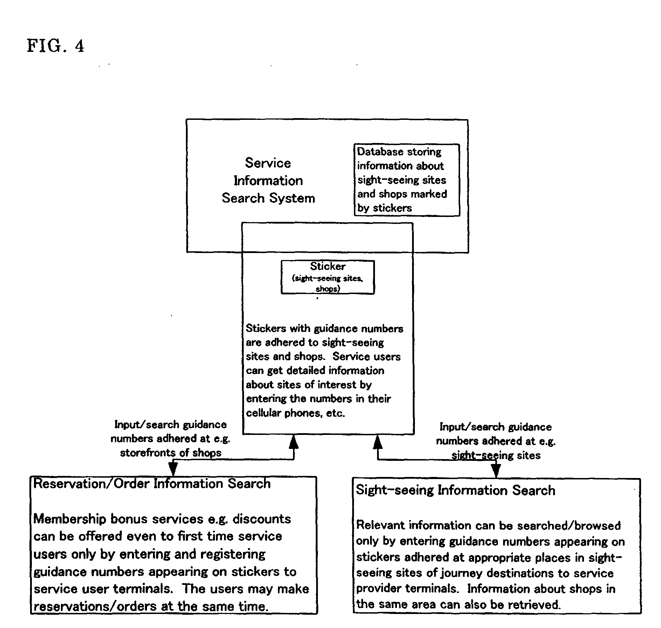

Referring now to FIG. 4, the service information search system is a system by which service users can search and get information about, for example, reservations, orders and sight-seeing related with enterprises, shops, hospitals, employment and leisure, using e-mail and service user terminals such as cellular phones and PDAs connectable to the Internet. For information search, keywords and guidance numbers on stickers adhered to the entrance of each shop and to appropriate places of sight-seeing sites are used. The resulting retrieved data about shops and sight-seeing sites includes relevant URLs and e-mail addresses, and users can browse such information, enter them in the bookmark stored in the cellular phone, and send e-mail to them.

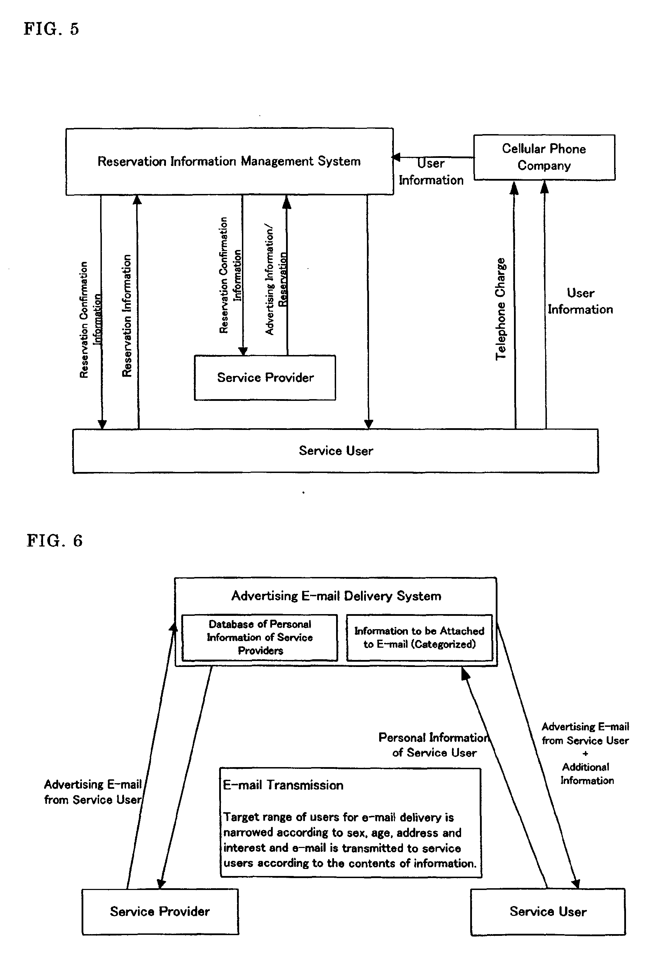

Referring now to FIG. 5, the reservation information management system is a system by which service users can make reservations with reference to the information about, for example, reservations, orders and sight-seeing, extracted by the service information search system, using e-mail and service user terminals such as cellular phones and PDAs connectable to the Internet. This system is configured so that service users cannot make a duplicated reservation for services that cannot be provided at the same time by the same service user. Since the service provider's shop can use the data a service user has entered to make a reservation, such data can be used for reservation confirmation and user identification (upon authentication).

Referring now to FIG. 6, the advertising mail delivery system is an advertising system by which service providers can send information about the service providers' shops, for example, advertising information of sales announcements directly to service user terminals possessed by the service users with e-mail. The service provider can select users to whom it sends e-mail, according to regional information, sex, age and other factors. In addition to the contents of e-mail posted by a service provider, this system can also extract only the information the service provider wants to deliver out of the information stored in a server and the like, in advance, and attach this information to the e-mail.

Now the hardware and software configurations of the member service system will be described below with reference to the accompanying drawings.

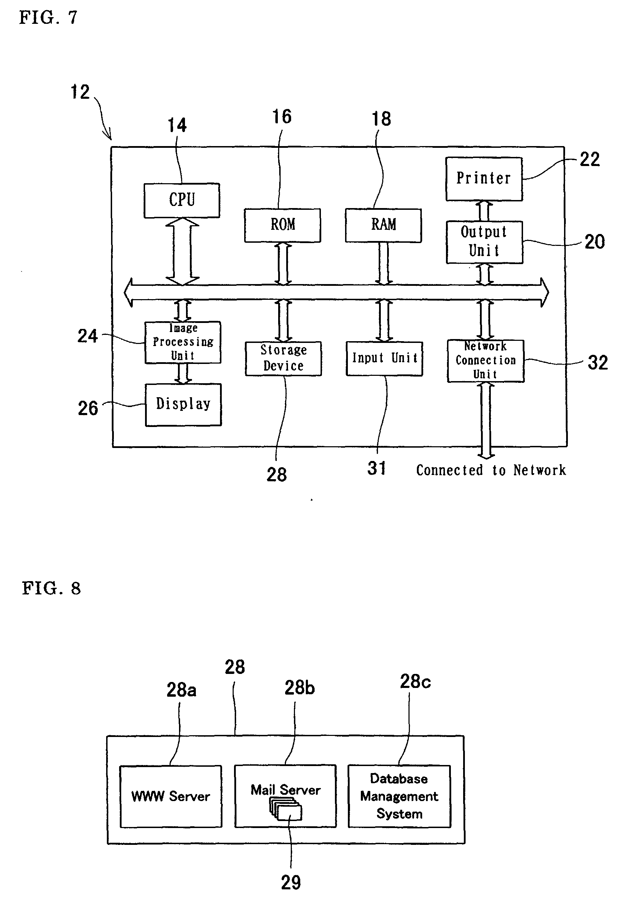

FIG. 7 is a block diagram illustrating the administration server. The administration server 12 manages various services provided through the use of the service user terminal 34. The administration server 12 includes a CPU 14. The CPU 14 is the central processing unit that conducts various calculations for conducting various processing in the administration server 12. The CPU 14 is connected to a ROM 16. The ROM 16 is a memory that stores the basic input/output processing program that is executed when the administration server 12 is activated. The CPU 14 is also connected to a RAM 18. The RAM 18 is a memory that temporarily stores the software programs and data to be used in the various calculations by the CPU 14.

The CPU 14 is connected to an output unit 20. The output unit 20 is an interface through which the various data obtained by calculations in the CPU 14 is sent out to a printer 22 or other suitable device. As described above, the output unit 20 is connected to the printer 22. The printer 110 prints various print data obtained by calculations on paper and other devices. As the printer 22, a laser printer, inkjet printer, dot printer, thermal printer and the like may be used. If the administration server 12 does not print data, the printer 22 may not be connected thereto.

The CPU 14 is connected to an image processing unit 24. The image processing unit 24 generates image data to be displayed on the screen based on the calculation results of the CPU 14. The image data generated by the image processing unit 24 is shown on the screen of a display 26 that is connected to the image processing unit 24. If there is no need to monitor the operation of the administration server 12, the display 26 may not be connected.

The CPU 14 is further connected to a storage device 28. The storage device 28 stores the programs and data to be used in various processing performed by the CPU 14 and data that the CPU 14 has generated as a result of its calculations. As shown in FIG. 8, the storage device 28 has a WWW server 28a, a mail server 28b, and a database management system 28c.

The WWW server 28a has the function of exchanging data such as HTML data, SGML data, XML data as well as CHTML data, MML data and HDML data optimized for WWW communications via cellular phones. The data that the WWW server 28a sends includes various kinds of data prepared in advance by the administrator of the administration server and service providers as well as data that the WWW server 28a generates using the data retrieved from a database of the database management system 28c.

The mail server 28b has the function of sending the text entered by a service provider terminal 38 to a service user terminal 34 as e-mail. Furthermore, the mail server 28b stores information data 29 that has been recorded in advance by the administrator of the administration server, as shown in FIG. 8. The information data 29 is the advertising data related to the advertising data provided by service providers and the advertising data about the system. This data includes texts describing advertising messages, URL of the homepage each service provider has and e-mail address. The information data 29 is categorized according to the occupations of persons who have prepared the data and the data contents. It is configured such that only information data 29 that the service user requested upon applying for membership is attached to the mail sent to the service user terminal 34.

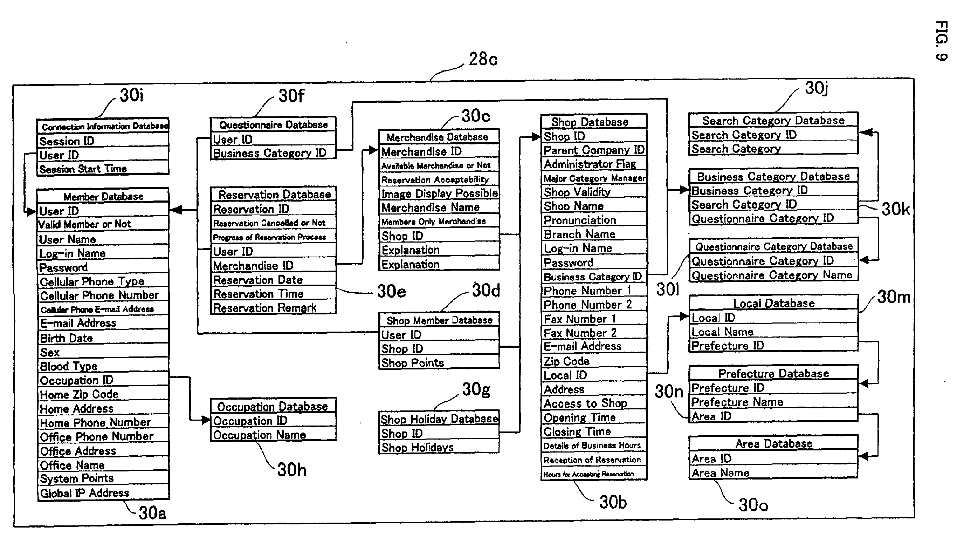

The database management system 28c is a management system that manages the information as database including the members' personal information gathered via service user terminals, shop information of the service providers, service and merchandise information provided by the service providers and information about which user is a member of which shop (service provider). Now the databases that the database management system 28c manages will be explained below with reference to FIG. 9.

The member database 30a stores personal information about the service users having membership, such as user ID, valid member or not, user name, log-in name, password, type of the cellular phone, cellular phone number, global IP address allocated to each service user terminal 34, cellular phone e-mail address, e-mail address, birth date, sex, blood type, occupation ID, home zip code, home address, home phone number, office phone number, office address, office name, and system discount points, with these being correlated with one another.

The shop database 30b stores information about the shops of service providers registered in the administration server 12, such as shop ID, parent company's ID, administrator's flag, major category manager, valid shop or not, shop name, pronunciation, branch office name, log-in name, password, minor category ID, phone number 1, phone number 2, FAX number 1, FAX number 2, e-mail address, zip code, local ID, address, access to the shop, opening hour, closing hour, details of the business hours, reservation available or not, and hours for reservation, with these items of information being correlated with one another. Service users have access to information specific to each shop by referring to the shop database 30b.

The merchandise database 30c stores the information about services and merchandise that the service providers provide, such as merchandise ID, available merchandise or not, ready to be reserved or not, carrying image information or not, merchandise name, merchandise only for shop members or not, shop ID, and explanation, with these being correlated with one another. It is possible to understand what merchandises are provided by which service provider by referring to the merchandise database 30c.

The shop member database 30d stores the information indicating which service user is the member of which service provider, such as user ID, shop ID, and shop point, with these being correlated with one another. It is possible by referring to the shop member database 30d to understand which service user is a member of which service provider and how many bonus points provided by the shop the user has received as a member.

The reservation database 30e stores the information about reservations the service users have made for the service providers, such as reservation ID, cancelled or not, progress of each reservation, user ID, merchandise ID, reservation date, reservation time, and remarks, with these being correlated with one anther. It is possible to understand which service user has made what reservation for which service provider and the current status of each reservation contents by referring to the reservation database 30e.

The questionnaire database 30f stores the information about the interest of service users, such as user ID and business category ID, with these being correlated with one another.

The shop holiday database 30g stores the information about the shop holidays of each service provider, such as shop ID and shop holidays, with these being correlated with one another.

The occupation database 30h stores the information about the linkage between the occupations and the occupation IDs, such as occupation ID and occupation name, with these being correlated with one another.

The connection information database 30i stores the information about connections established by service users to the system, such as session ID, member ID, and session start time, with these being correlated with one another.

The search category database 30j stores the information about the linkage between the search categories and search IDs, such as search category ID and search category, with these being correlated with each other.

The business category database 30k stores the information about the linkage between the business category IDs, search category IDs, and questionnaire category IDs, such as business category ID, search category ID, and questionnaire category ID, with these being correlated with one another.

The questionnaire category database 301 stores the information about the linkage between the questionnaire category IDs and questionnaire category IDs, such as questionnaire category ID and questionnaire category name, with these being correlated with each other.

The local database 30m stores the information about the linkage between the local IDs, local names, and prefecture IDs, such as local ID, local name, and prefecture ID, with these being correlated with one another.

The prefecture database 30n stores the information about the linkage between the prefecture IDs, prefecture names, and local IDs, such as prefecture ID, prefecture name, and local ID, with these being correlated with one another.

The local database 30o stores the information about the linkage between the local names and local IDs, such as local ID and local name, with these being correlated with each other.

As shown by arrows in FIG. 9, these databases are configured such that data is correlated with data in the other databases, and so as to be able to refer to data in the respective databases for searching and retrieving data recorded in the other database.

The CPU 14 is connected to an input unit 31. The input unit 31 is an interface for connection to input devices (not shown) such as a mouse, a keyboard, a tablet, and a scanner, or other suitable device. Various commands and data are sent to the CPU 14 via the interface. If there is no data entry in the administration server 12, input devices such as a keyboard and a mouse may not be connected to the input unit 31. In addition, the CPU 14 is connected to a network connection unit 32. As the network connection unit 32, for example, a modem, a terminal adaptor, and a LAN card, or other suitable device, may be used. The network connection unit 32 is connected to a network 200.

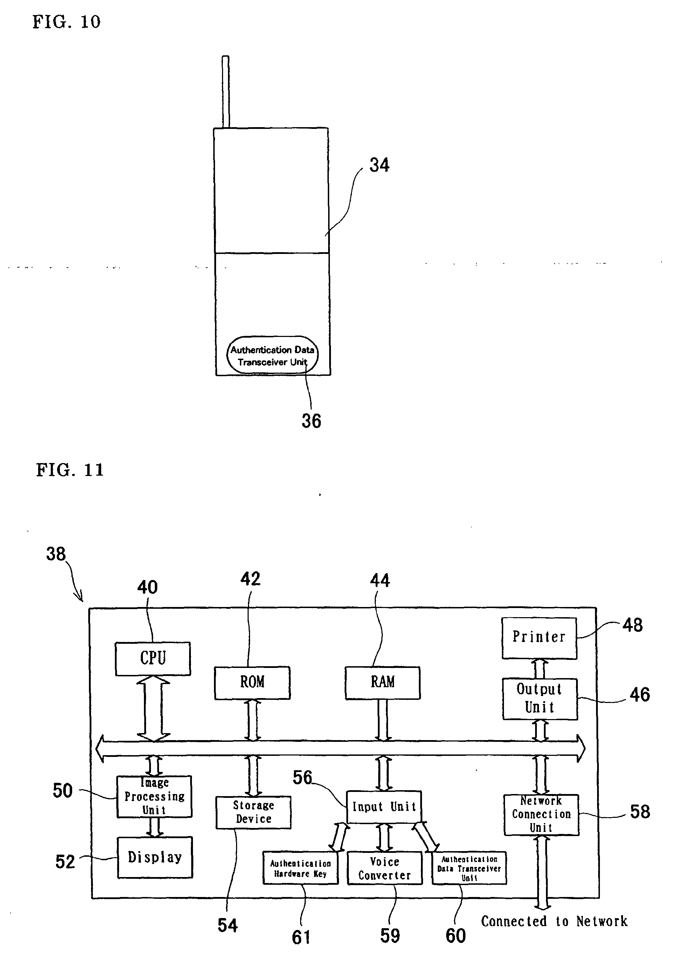

FIG. 10 is a block diagram illustrating the service user terminal 34. The service user terminal 34 is a terminal with which the service user uses a variety of services in the administration server 12. The service user terminal 34 has a telephone function and a function for exchanging packets which is carried out between computers, and is a portable info-communications device such as cellular phones, PDAs, and notebook PCs which can exchange e-mail, browse homepages, and post data in homepages.

The service user terminal 34 has an authentication data transceiver unit 36. The authentication data transceiver unit 36, which is connected to the service provider terminal 38, works as a communication port through which the phone number of the service user terminal 34 and authentication data are exchanged. As the authentication data transceiver unit 36, a serial connection terminal, an infrared communication port, a Bluetooth communication port, and a wireless LAN device installed in cellular phones, PDAs, and notebook PCs may be used. In other words, as the authentication data transceiver unit 36 a communications device capable of exchanging data with external systems, whether wired or wireless, adopting one of the electronic communications method, electric communications method, electromagnetic communications method, and optical communications method may be used.

FIG. 11 is a block diagram illustrating the service provider terminal. The service provider terminal 38 is a terminal installed in the shops that provide various services and sell merchandise. As shown in FIG. 11, the service provider terminal 38 has a CPU 40, a ROM 42, a RAM 44, an output unit 46, a printer 48, an image processing unit 50, a display 52, a storage device 54, an input unit 56, and a network connection unit 58, which all have functions similar to those installed in the administration server 12. The descriptions below are the differences from the administration server 12.

The input unit 56 of the service provider terminal 38 is connected to a voice converting function unit 59 in addition to the input device (not shown). The voice converting function unit 59 has the function of sampling voice and converting the voice into digital data, or an audio file, and generates an audio file of voice replayed with the service user terminal 34. The generated audio file is used for authentication in a reservation authentication system 54b that will be described later.

The input unit 56 is connected to an authentication data transceiver unit 60. This authentication data transceiver unit 60, which is connected to the authentication data transceiver unit 36 of the service user terminal 34, functions as a communication port for exchanging authentication data such as the phone number of the service user terminal 34. As the authentication data transceiver unit 60, a serial connection terminal, an infrared communication port, a Bluetooth communication port, and a wireless LAN device, which are used in the authentication data transceiver unit 36 of the service user terminal 36, may be used. The authentication data transceiver unit 104 preferably has a device connectable to all the service user terminals 34 to be responsive to all of them.

The input unit 56 is connected to an authentication hardware key 61. The log-in ID, password and log-in program which will be used to establish a connection with the administration server 12 are recorded in the authentication hardware key 61. When the service provider terminal 38 makes a connection to the administration server 12, the log-in program of the authentication hardware key 61 sends out a log-in ID and a password given to each service provider by the administrator of the administration server 12. The authentication hardware key 61 is mounted detachably in the serial terminal or USB port, for example. The key can be mounted in any service provider terminal.

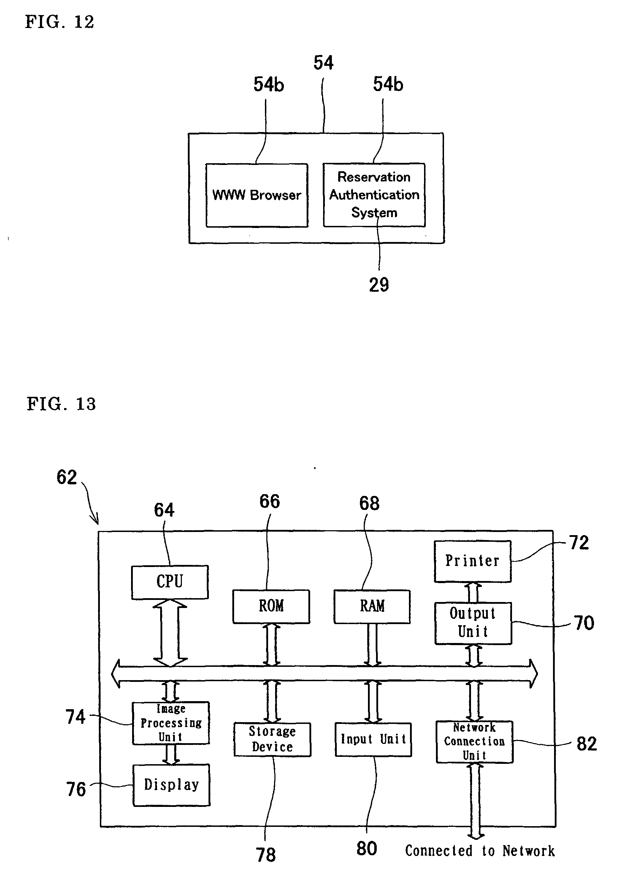

As shown in FIG. 12, the storage device 54 of the service provider terminal 38 stores a WWW browser 54a and a reservation authentication system 54b. The WWW browser 54a visualizes the HTML data sent from the WWW server 28a of the administration server 12 on the display 52. The reservation authentication system 54b has the function of user identification and authentication based on the reservation data and authentication data sent from the administration server 12 as well as the phone number and authentication data of the service user terminal 34.

FIG. 13 is a block diagram illustrating the billing server. The billing server 62 is a server that exchanges the billing data to be used when a service user pays a bill with his/her service user terminal 34. The billing server 62 has a CPU 64, a ROM 66, a RAM 68, an output unit 70, a printer 72, an image processing unit 74, a display 76, a storage device 78, an input unit 80, and a network connection unit 82, which all have the functions similar to those of the devices adopted in the administration server 12 and the service provider terminal 38. The descriptions below are the differences from the administration server 12.

The storage device 78 of the billing server 62 records a billing system (not shown). The billing system stores the invoice data when a service provider provides a service or sells merchandise to a service user and claims the user for the payment.

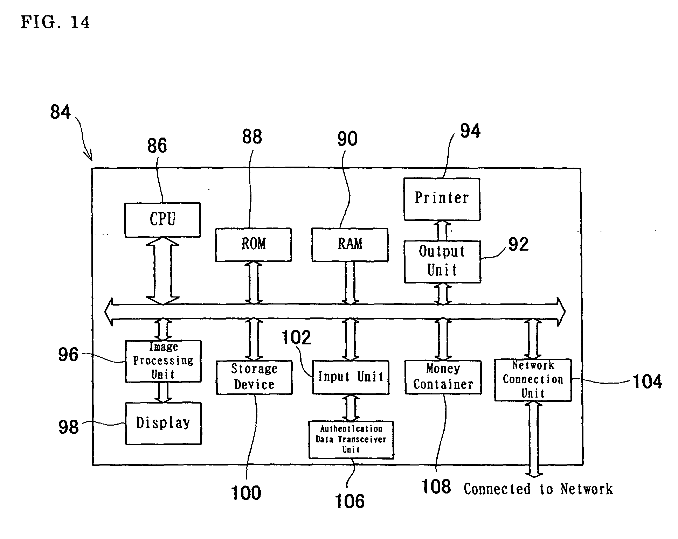

FIG. 14 is a block diagram illustrating a settlement terminal. The settlement terminal 84 is a terminal that is installed in shops such as convenience stores and supermarkets, and the service user uses it when settling a bill via his/her service user terminal 34 connected thereto. The settlement terminal 84 has a CPU 86, a ROM 88, a RAM 90, an output unit 92, a printer 94, an image processing unit 96, a display 98, a storage device 100, an input unit 102, and a network connection unit 104, which all have the functions similar to those of the devices adopted in the administration server 12 and the service provider terminal 38. The descriptions below are the differences from the administration server 12.

The input unit 102 of the settlement terminal 84 is connected to an authentication data transceiver unit 104 in addition to the input device (not shown). This authentication data transceiver unit 106 is a similar unit to that used in the service provider terminal 38, which exchanges the phone number and authentication data with the authentication data transceiver unit 36 of the service user terminal 34.

The CPU 86 is connected to a money container 108. The money container 108 is a device that holds bank bills and changes to be used when a service user pays a bill, and which is configured to work appropriately by being controlled via commands from the CPU 86.

The storage device 100 stores a settlement system (not shown). The settlement system has the function of dealing with the settlement process conducted for a bill which a service provider has sent to a service user.

In this configuration, the network 150 is the Internet. The present invention can use networks other than the Internet, for example, the public phone network, the ISDN network, the cellular phone network, a LAN network, a WAN network, their combinations and a dedicated network.

The administration server 12, the service provider terminal 38, and the billing server 62 can be built similarly by connecting printers and voice converters to a computer such as a personal computer, a work station, and a server, with a WWW server, a mail server, a database software, and a WWW browser installed therein. With respect to the billing server 62, if an existing billing server is available, it can work as the billing server 62 by simply preparing an interface through which data can be exchanged with the administration server 12 and the settlement terminal 84.

The settlement terminal 84 can be prepared similarly by connecting a device that can exchange the authentication data to an existing POS register and by preparing an interface through which data can be exchanged with the administration server 12 and the settlement terminal 84.

Next described are the steps by which a service user having a service user terminal 34 applies for a service using the present system and receives the service.

First, the service user enters to his/her service user terminal 34 a URL, for example, "http://rnrn.net", which is assigned to the administration server 12 to access to the administration server 12.

Next, the administration server 12 sends data for displaying the top menu screen image to the service user terminal 34.

The service user terminal 34 that has received the top menu screen image displays the top menu screen image (shown in FIG. 15(a)) on the display of the user terminal 34. The screen image displayed on the display of the service user terminal 34 is displayed based on the data sent from the WWW server 28a in the administration server 12.

If the service user has not enrolled himself/herself as a member in the present system, he/she is urged to do so, as shown in FIG. 15, by selecting "Enroll me as a RNRN member!!" After reading the system description and Terms and Conditions (shown in FIGs. 15(b) and 15(f)), the service user inputs the phone number of his/her service user terminal 34, appropriate password, and personal information such as his/her name and address, and pushes "Register" button to send such data to the administration server (shown in FIG. 15(c)). The administration server 12 that has received such data allocates a log-in name and a user name to the service user terminal 34, using the database management system 28c, and then stores the data in the member database 30a of the database management means 28c. The present system uses the phone number of the service user terminal 34 as the user ID.

The administration server 12 sends data for displaying a screen image indicating the completion of membership enrollment along with the log-in name and his/her phone number to the service user terminal 34 (shown in FIG. 15(d)). The service user selects "Interest/hobby" in the screen image of completing enrollment to check the category in which the service user is interested and the category to which the hobby of the service user belongs. Then selecting "Send", the service user sends the data about his/her interest and hobby, which will be stored as the business category ID in the questionnaire database, to the administration server 12 (shown in FIG. 15(e)).

Operating the service user terminal 34, the service user selects the shop to which he/she makes a reservation. As shown in FIG. 16, when a service user selects a shop for making a reservation, he/she may extract the target shop using key words and its shop ID. Alternatively, as shown in FIG. 17, he/she may appropriately select a category such as "Food", "Drink", and "Leisure" shown on the top menu screen image down to the following screen images, and, as shown in FIG. 18, he/she may select "What's new" on the top menu screen image, and then choose a desired shop. It is preferred that the shop ID be shown as a sticker number (guidance number) of a sticker as shown in FIG. 19, which is attached in an appropriate place of each shop, for example, its entrance or storefront, and of sight-seeing sites so that the service users can understand the shop ID.

If the service user has not been enrolled as a shop member, he/she is then urged to enroll himself/herself as a new member of the shop (shown in FIG. 20). For enrollment, as shown in FIG. 20(d), the user only has to input his/her phone number (user ID) and a password. The administration server 12 searches the member database 30a by searching the member database a using the input phone number (user ID) and the password, discriminates whether the user is a member already enrolled in the system or not, and enrolls the user as a shop member if he/she is a member of the present system. When the user is enrolled as a shop member, the administration server 12 records his/her user ID and the shop ID, correlating them with each other in the shop member database 30a. If a service provider classifies its members according to their membership fees and other data and changes services and merchandise presented to the customers according to their membership classes, a screen image for selecting a membership class is sent to the service user terminal, and the class selected by the member is recorded in the shop member database 30a as the membership class data.

Next, the service user makes a reservation for merchandise purchase or services. When making a reservation, the service user appropriately selects merchandise or a service displayed on the display and inputs data such as time and date he/she will receive it. Then he/she enters his/her phone number (user ID) and password, and selects "Send" on the display to complete the reservation (shown in FIG. 21). When "Send" is clicked, the merchandise ID given to the selected merchandise or service, time and date of the use, phone number (user ID) and password are sent out to the administration server 12. The service provider may change the merchandise and services to be displayed (provided) based on various conditions. For example, depending on each membership class of the service user, different merchandise or services may be displayed on the display. Further, different price offers may be presented depending on the keyword entered upon search.

It is determined whether the reservation the service user has made should be refused or not. The administration server 12 searches the reservation database 30e using the received phone number (user ID) as a search key to check for another reservation of a service of the same category as the received merchandise ID made for the same time and date.

If there is no duplicated reservation, the reservation confirmation screen image is sent to the service user terminal 34. When the service user agrees to the returned reservation contents, the reservation completion screen image is sent to the service user terminal 34. Then, the administration server 12 records the received merchandise ID, user ID and other data in the reservation database 30e, correlating them with each other. Based on the data recorded in the reservation database 30e, the administration server 12 sends e-mail describing the reservation contents and data for authentication to the service user terminal 34, and stores the received reservation contents in the reservation database 30e. If there is a duplicated reservation, data for displaying an error screen image is sent to the service user terminal 34, and the reservation contents are not stored in the reservation database 30e.

When a service user visits a shop, for example, of the service provider to receive the service he has reserved, the service provider connects the authentication data transceiver unit 36 of the service user terminal 34 with the authentication data transceiver unit 60 of the service provider terminal 38 to receive the phone number of the service user terminal 34 and authentication data.

The service provider terminal 38 judges whether the phone number and authentication data received at the previous step match the phone number and authentication data sent from the administration server 12.

Through these steps, the service user can be granted for the service only by carrying his/her service user terminal 32 to receive the service he/she has requested.

In this way, the member service providing system according to the present invention enables a service user to easily reserve various services only by operating his/her service user terminal 34. It is also possible to prevent duplicated reservations by managing the reservation data. Furthermore, the service user can identify himself/herself only by presenting his/her phone number of the service user terminal 34, with no necessity of carrying or having a membership card or other identification card, because the membership number is indicated by and the same as the phone number.

Next explained is the process of sending e-mail from a service provider 38 to a service user terminal 34. First, the service provider terminal 38 establishes a connection to the administration server 12. Then the service provider terminal 38 automatically logs in to the administration server 12, utilizing the authentication hardware key 61.

Next, the service provider limits the range of e-mail target service users among those on its member list in the shop member database 30a, using the database management system 28c based on appropriate conditions.

Using the WWW server 28a, the service provider inputs to the administration server 12 the contents of the e-mail to be sent.

When the service provider has written the e-mail, he/she clicks a button on the display arranged at an appropriate position. Then the written e-mail content is sent to the mail server 28b in the administration server 12.

The mail server 28b gets the information the target service user may want from the category database 30j, attaches the information data 29 meeting each service user's needs to the contents of e-mail written by the service provider, and sends the e-mail to the service user terminal 34 of each service user. Note that such information data 29 about service providers belonging to the same business category as the current service provider that has written the e-mail is not attached to the e-mail.

In this way, the present invention can make more service users read the delivered e-mail by attaching e-mail posted by the service provider to the information the service user may want.

If the e-mail fails to reach a member more than a predetermined number of times, the mail server 28b may record data indicating that he/she is no longer a valid member in the "Valid/Invalid member" column in the member database 30a, and remove such a member from the member list when it prepares a list for use in sending e-mail.

Next explained are the steps by which a service provider sends a bill to a service user and the user settles the bill.

First, e-mail representing an invoice is sent from the billing server 62 that the service provider is using to the service user terminal 32. The steps for sending such e-mail are the same as those for connecting the service provider terminal 38 to the administration server 12 for sending e-mail.

The service user who has received an e-mail invoice goes to a convenience store, supermarket or the like where a settlement terminal 84 is installed, and connects the authentication data transceiver unit 36 of the service user terminal 34 to the authentication data transceiver unit 104 of the settlement terminal 84 to send the phone number of the service user terminal 34 to the settlement terminal 84.

The settlement terminal 84 determines which service provider the service user possessing the service user terminal 34 belongs to by searching the phone number it has received in the shop member database 30d of the database management system 28c of the administration server 12.

If the service user is a member belonging to any one of the service providers registered in the administration server 12, the administration server 12 runs a query about invoice and other information to the corresponding billing server 62. If the billing server 62 holds the data about the bill, the administration server 12 receives the billing data from the billing server 62. This process may be carried out by either a single or more than one billing server 62.

The administration server 12 sends the received billing data. The settlement terminal 84 that has received the billing data displays the invoice and other information based on the data on its display. If two or more billing servers 62 send invoice data, all the data is shown on the display and the service user selects appropriate ones which he/she needs.

The service user checks the displayed amount payable and then pays the bill. When the bill has been settled, the settlement terminal 84 sends to the billing server 64 the data indicating the completion of payment and ends the billing process by the service provider.

After the completion of payment, the settlement terminal 84 sends to the administration server 12 command data to add points to the data relating to system points number in the member database 30a. The points are allocated based on an appropriate setting by the service provider according to the paid amount of the purchase.

In this way, the member service providing system according to the present invention enables the service providers to quickly and correctly carry out billing procedures to the service users. The above-described billing process is useful not only for handling the reservations via the present system but for periodic billing by a service provider to its service users who has made contracts for utilities services or merchandise purchases such as gas, water and power. In such a case, however, utility companies of gas, water and power need to be registered in the shop database 30b as shop members, and the service user needs to be registered in the shop member database 30d as a member of such companies.

In the above-described preferred embodiments of the present invention, the reservation contents data and the authentication data are preferably sent to the service provider terminal. The authentication data, however, is not required to be sent to the service provider terminal. In this case, user identification may be made only by his phone number, not using authentication data. In such case, the service user may tell the phone number of his/her own cellular phone orally to the service provider.

In the above-described preferred embodiments of the present invention, the phone number is preferably used for user identification. However, this is not a fixed way of identifying service users. For example, if the cellular phone has a global IP address, it can be used for individual identification.

In the above-described preferred embodiments of the present invention, the authentication data is preferably prepared in addition to the identification number (phone number or global IP address). However, the present invention is not limited thereto, and an audio file may be generated and used as identification data.

In the above-described embodiments of the present invention, the service provider terminal, the billing server, and the settlement terminal are preferably separate. However, the present invention is not limited thereto, and their functions may be integrated in a single computer to be placed in the shops of each service provider, for example. Then the present system can be used even by such service providers as restaurants that have a short time for collecting charges after having provided a service.

### INDUSTRIAL APPLICABILITY

The member service providing system according to the present invention provides a reservation management which can be carried out securely and easily, allows the service users and service providers to effectively utilize membership systems, and improves the sales promotion activities using direct e-mail. Thus, the present system can be used in various services, merchandise sales, reservations, and advertising activities.

## Claims

1. A member service providing method using a computer network, the method comprising the steps of:
acquiring personal information of each service user who is provided with a member service;
recording the personal information of the service user who is provided with the member service;
acquiring information about a shop of a service provider who provides member services to service users thereof and information about merchandise and/or services the service provider provides;
recording the information about the shop of the service provider who provides the member services to the service users and the information about the merchandise and/or the services the service provider provides;
transmitting data for displaying contents of the merchandise and/or the services provided by the service provider on a service user terminal used by the service user;
recording the contents of a request of a merchandise purchase and/or service that the service user has made for the displayed merchandise and/or the services; and
managing collectively the recorded contents of the request for each service provider.

2. The member service providing method according to claim 1, wherein
the information about the shop of the service provider who provides the member services to the service users includes information about business categories to which the shop belongs,
the contents of the request of the merchandise purchase and/or the service that the service user has made for the displayed merchandise and/or the services include information about business categories to which the shop dealing the displayed merchandise and/or the services belongs, and
the method further comprises the step of checking for a request made for the same time and date and the same business category by comparing contents of requests made so far with the contents of the request of the merchandise purchase and/or service that the service user has made for the displayed merchandise and/or the services.

3. The member service providing method according to claim 2, further comprising the step of transmitting to the service provider data rejecting the contents of the request of the merchandise purchase and/or the service that the service user has made for the displayed merchandise and/or services if there is another request made for the same time and date and the same business category in the step of checking for the request made for the same time and date and the same business category by comparing the contents of the request of the merchandise purchase and/or the service that the service user has made so far for the displayed merchandise and/or services with the contents of the request of the merchandise purchase and/or the service that the service user has made for the displayed merchandise and/or the services.

4. The member service providing method according to any one of claims 1 to 3, wherein
the personal information of the service user who is provided with the member service and the contents of the request of the merchandise purchase and/or the service that the service user has made for the displayed merchandise and/or services include an identification number of the service user terminal used by the service user, and
the method further comprises the step of
acquiring the identification number of the service user terminal the service user carries, when the service provider materializes the contents of the request of the merchandise purchase and/or the service that the service user has made for the displayed merchandise and/or the services, and
verifying the acquired identification number against the recorded contents of the request of the merchandise purchase and/or the service that the service user has made for the displayed merchandise and/or services, by the service provider.

5. The member service providing method according to claim 4, wherein the identification number is a phone number.

6. The member service providing method according to claim 4, wherein the identification number is a global IP address.

7. The member service providing method according to any one of claims 1 to 6, wherein,
the personal information of the service user includes an e-mail address of the service user, and
the method further comprises the step of attaching information recorded in advance to be attached to e-mail and sending the e-mail, when the service provider sends e-mail to the e-mail address of the service user.

8. The member service providing method according to any one of claims 1 to 7, wherein
the personal information of the service user who is provided with the member service includes information about a category of a matter which the service user desires,
the information recorded in advance to be attached to e-mail includes information about a category to which the information of interest belongs, and
in the step of attaching the information recorded in advance to be attached to e-mail and sending the e-mail when the service provider sends the e-mail to the e-mail address of the service user, only information to be attached to e-mail, which belongs to the category of the matter which the service user desires is attached to the e-mail.

9. A member service providing system comprising a service user terminal carried by a service user, a service provider terminal used by a service provider, and an administration server for managing service arrangements, the terminals and the server being connected to one another via a network, wherein
the administration server comprises
a service user database storing personal information data of member service users,
a merchandise database storing data about services and merchandise provided by the service provider, and
a reservation database storing reservation data created when the service user makes a service request through the service user terminal with reference to the merchandise database, and
the administration server has a function of managing the reservations for each service provider.

10. The member service providing system according to claim 9, wherein, when a reservation is made through the service user terminal, the administration server answers that the reservation is refused if there is data of another reservation made for the same time and date and the same business category stored in the reservation database.

11. The member service providing system according to claim 9 or 10, wherein
identification numbers are allocated to the service user terminals with no overlap,
the personal information includes the identification number of the service user terminal used by the service user,
the identification number of the service user terminal through which a reservation has been made is recorded in the reservation data, and
user identification upon each service is carried out by searching the service reservation database using the identification number as a search key.

12. The member service providing system according to any one of claims 9 to 11, wherein the search in the service reservation database is carried out with the service provider terminal.

13. The member service providing system according to claim 11 or 12, wherein the identification number is sent to the service provider terminal from the service user terminal by at least one of an electronic communications method, an electric communications method, an electromagnetic communications method, and an optical communications method, and the sent identification number is used for search in the service reservation database.

14. The member service providing system according to any one of claims 11 to 13, wherein the service user terminal is a communications device having telephone and packet exchange functions, and the identification number is a phone number.

15. The member service providing system according to any one of claims 11 to 13, wherein the service user terminal is a communications device having telephone and packet exchange functions and the identification number is a global IP address.

16. The member service providing system according to any one of claims 9 to 15, wherein
the administration server sends to the service user terminal authentication data created or selected for each reservation that is made with the service user terminal, and
user identification is carried out by sending the authentication data to the service provider terminal from the service user terminal by at least one of an electronic communications method, an electric communications method, and an optical communications method, and by conducting search in the service reservation database using the sent authentication data.

17. The member service providing system according to claim 16, wherein
the authentication data is sent also to the service provider terminal to which the reservation is made, and
user identification upon each service is carried out by comparing the authentication data sent from the service user terminal with the authentication data sent from the administration server.

18. The member service providing system according to claim 16 or 17, wherein the authentication data is audio data with which a voice replay function of the service user terminal talks, and the user identification is carried out by replaying said audio data with the service user terminal.

19. The member service providing system according to claim 18, wherein the service provider terminal has a voice converting function unit for converting voice into audio data, and user identification is carried out by converting voice replayed by the service user terminal into audio data, and comparing the audio data with the authentication data sent from the administration server.

20. The member service providing system according to any one of claims 9 to 19, wherein previously specified information data is attached to e-mail to be sent when the e-mail is sent from the service provider terminal to the service user terminal via the administration server.

21. The member service providing system according to claim 20, wherein the information data includes URL of an appropriate homepage.

22. The member service providing system according to claim 20 or 21, wherein
the administration server has a questionnaire database storing data related to a category of information which the service user desires,
the information data has an attribute of categories, and
only the information data belonging to a category corresponding to the data related to the category of the information which the service user desires is attached to the e-mail.

23. The member service providing system according to any one of claims 20 to 22, wherein
the administration server has a service provider database storing business category data related to business categories to which at least the service providers using the service provider terminals belong,
the information data has attributes of business categories, and
when the service provider terminal sends e-mail to the service user terminal via the administration server, the administration server acquires the business category to which the service provider terminal belongs from the service provider database and does not attach to the e-mail the information data having the attributes of the same business category as the acquired one.

24. The member service providing system according any one of claims 9 to 23, wherein if the sent e-mail fails to reach the service user terminal a predetermined number of times, the administration server deactivates a function of sending e-mail to the service user terminal.

25. The member service providing system according to any one of claims 9 to 24, wherein the service provider terminal sends to the service user terminal electronic data about how much the service user owes for the merchandise purchase and/or the service.

26. The member service providing system according to claim 25, wherein the electronic data is e-mail.

27. The member service providing system according to any one of claims 9 to 26, wherein a point allocated for payment for the service and/or the merchandise purchase is given according to how much the service user has used services and/or purchased merchandise.

28. The member service providing system according to claim 27, wherein the point is accepted only by the service provider from which the service user has received a service and/or purchased merchandise.

29. The member service providing system according to claim 27, wherein the point is accepted by all the service providers registered in the administration server.

30. The member service providing system according to claim 27, wherein the point includes a point acceptable only by the service provider from which the service user has received a service and/or merchandise and a point acceptable by all the service providers registered in the administration server, and the point acceptable only by the service provider from which the service user has received the service and/or merchandise and the point acceptable by all the service providers registered in the administration server are exchangeable.

31. The member service providing system according to claim 30, wherein the point acceptable only by the service provider from which the service user has received the service and/or merchandise can be exchanged at a predetermined exchange rate with the point acceptable by all the service providers registered in the administration server.

32. A cellular phone-based customer reservation management system dealing with reservations collectively that are made by service users and placed with a plurality of service providers, the system comprising: plural types of service user terminals; a plurality of service provider terminals possessed by service providers providing individual services of the plural types; and a system server having a customer database storing information about at least one service user who receives services, and a client information database that is installed in each service provider and stores information about the individual service providers and contents of their services, wherein the system server accepts via the individual service provider terminals service reservations sent from the service user terminals to the service provider terminals, and manages collectively the reservations placed with each service provider.

33. The cellular phone-based customer reservation management system according to claim 32, wherein the system answers that the reservation is refused if another reservation has already been made for the same time and date and the same business category by the respective service users when the service user makes a reservation for a service.

34. The cellular phone-based customer reservation management system according to claim 32 or 33, wherein service user identification is carried out by referring to the respective databases in the server based on a number allocated to the service user terminal possessed by each service user.

35. The cellular phone-based customer reservation management system according to any one of claims 32 to 34, wherein, when the service provider sends e-mail to its service users, information specified by a system administrator of the system server is sent attached to the e-mail.
